Europäisches Patentamt

European Patent Office

Office européen des brevets

(19)

(11) EP 0 598 741 B1

(12) **EUROPÄISCHE PATENTSCHRIFT**

(45) Veröffentlichungstag und Bekanntmachung des Hinweises auf die Patenterteilung:
**20.11.1996 Patentblatt 1996/47**

(21) Anmeldenummer: 92913785.9

(22) Anmeldetag: 30.06.1992

(51) Int Cl.6: **G06F 11/34**

(86) Internationale Anmeldenummer:
**PCT/EP92/01469**

(87) Internationale Veröffentlichungsnummer:
**WO 93/04428 (04.03.1993 Gazette 1993/06)**

(54) **VERFAHREN ZUM GENERIEREN EINES REFERENZSTRINGS**

PROCESS FOR GENERATING A REFERENCE STRING

PROCEDE POUR LA GENERATION D'UNE CHAINE DE REFERENCE

(84) Benannte Vertragsstaaten:
**AT BE DE GB IT**

(30) Priorität: **14.08.1991 EP 91113665**

(43) Veröffentlichungstag der Anmeldung:
**01.06.1994 Patentblatt 1994/22**

(73) Patentinhaber: **Siemens Nixdorf Informationssysteme Aktiengesellschaft 33102 Paderborn (DE)**

(72) Erfinder:
- **THUDT, Raimar**
  **D-80995 München (DE)**
- **STIEBER, Harald**
  **D-91058 Erlangen (DE)**
- **BUSSERT, Wolfgang**
  **D-81371 München (DE)**

(74) Vertreter: **Fuchs, Franz-Josef, Dr.-Ing. et al Postfach 22 13 17 80503 München (DE)**

(56) Entgegenhaltungen:
- **PROCEEDINGS OF THE 6TH INTERNATIONAL CONFERENCE ON DISTRIBUTED COMPUTING SYSTEMS, 19-23 Mai 1986, Seiten 302-312, IEEE, New York, US; F. FEATHER: 'Validation of a fault-tolerant multiprocessor: synthetic workload implementation'**
- **COMPUTER PERFORMANCE Bd. 5, Nr. 1, März 1984, BUTTERWORTH & CO; GB Seiten 31 - 37 H.D. HUGHES 'Generating a drive workload from clustered data'**
- **J.R.Spirn: "Program Behaviour: Models and Measurements" in Operating and Programming Systems Series, Elsevier Computer Science Library, Elsevier, New York Oxford Amsterdam, 1977, pages 56-142**

## Beschreibung

Die Erfindung betrifft ein Verfahren zum Generieren eines Referenzstrings.

Datenverarbeitungssysteme und ihre Subsysteme sind durch die Dienste charakterisierbar, die sie Anwendern anbieten, beispielsweise menschlichen Benutzern oder übergeordneten Systemkomponenten. Von der Anwenderseite werden Aufträge erteilt, die die von einer Systemkomponente angebotenen Dienste nutzen. Zwischen dem Anwender und der Systemkomponente besteht ein Auftraggeber-/Auftragnehmerverhältnis. Die Menge der vom Auftraggeber geforderten Aufträge bildet die Last der Systemkomponente. Die pro Zeiteinheit erledigten Aufträge bilden die meßbare Leistung der Systemkomponente. Eine Bewertung dieser Leistung kann entweder durch eine Messung an einem realen System oder durch eine Analyse eines entsprechenden Modells erfolgen. Eine Simulation bildet hierbei eine wichtige Methode. Eine unverzichtbare Voraussetzung für eine fundierte Interpretation der Ergebnisse bei der Simulationsuntersuchung bildet eine Verfügbarkeit von im Detail bekannten und gezielt variierbaren Lasten.

Beispielsweise können Speicherhierarchien als Systemkomponenten betrachtet werden. Als ein Auftrag ist ein Zugriff auf einen Speicherblock definierbar, der durch eine Adresse identifizierbar ist. Zusätzlich kann der Zugriff durch eine Reihe von weiteren Merkmalen charakterisiert sein, etwa ob der Speicher gelesen oder geschrieben werden soll, u.s.w. Eine Folge beispielsweise von Speicherzugriffen als eine Reihe von Blöcken wird als Referenzstring bezeichnet. Mit jedem Speicherzugriff ist ein bestimmter Zeitbedarf verbunden, so daß ein derartiger Referenzstring auf eine Zeitachse abgebildet werden kann. Ein Referenzstring ist durch die Angabe von Eigenschaften charakterisierbar. Diese Menge von Eigenschaften bildet das Profil des Referenzstrings. Zeitunabhängige Eigenschaften des Referenzstrings werden statisch genannt, während zeitabhängige Eigenschaften des Referenzstrings dynamisch genannt werden. In einem Datenverarbeitungssystem, an dem mehrere Prozesse, welche auch Task genannt werden, beispielsweise im Zeitscheibenverfahren bedient werden sollen, setzt sich ein primärer Referenzstring, der beispielsweise ein Speichersystem belastet, aus den Anforderungen von einzelnen Benutzerprozessen zusammen. Einen sekundären Referenzstring bilden die von einem einzelnen Benutzerprozeß stammenden Speicherzugriffe. Von besonderer Bedeutung ist im folgenden insbesondere die Untersuchung von sekundären Referenzstrings.

Als eine Analyse erfolgt eine Bestimmung von statischen und dynamischen Eigenschaften eines Referenzstrings. Dies erfolgt häufig mittels eines Analysetools, beispielsweise eines geeigneten Programmes als ein Softwarewerkzeug. Insbesondere wird eine Analyse an einem gemessenen Referenzstring ausgeführt. Eine derartige Messung wird beispielsweise bei einem realen Ablauf an einem Datenverarbeitungssystem ausgeführt. Dies ist häufig mit hohen Kosten verbunden.

Als eine Synthese erfolgt eine Generierung von künstlich erzeugten Referenzstrings. Dies erfolgt insbesondere mit einem Synthesetool, beispielsweise einem geeigneten Programm als ein Softwarewerkzeug. Die Synthese stellt eine Alternative zur kostspieligen Messung dar. Ein Maß für die Qualität des generierten Referenzstrings bildet der Grad der Übereinstimmung zum gemessenen Referenzstring. Als eine Profiltreue wird die Übereinstimmung zwischen gemessenem und generiertem Referenzstring bezeichnet. Als eine Reproduktion wird eine Synthese bezeichnet, bei welcher eine höchstmögliche Profiltreue erzielt ist. Unterschiedliche Syntheseverfahren können bezüglich einer erzielbaren Reproduktion bewertet werden. Insbesondere sind bei guter Reproduktion ausgewählte Eigenschaften des generierten Referenzstrings auch ein Ausgangspunkt für deren Variierung. Eine Steuerung des Synthesetools erfolgt dabei über Parameter, die vom Benutzer eingestellt werden können. Zwischen den Eigenschaften des generierten Referenzstrings und den vorgegebenen Parametereinstellungen besteht unmittelbarer Zusammenhang.

Eine Lastanalyse und eine Lastsynthese sind als Subsysteme in einer Toolkette integrierbar. Das Analysetool liefert Tabellen, die die Ergebnisse statistischer Auswertungen enthalten und Dateien, die die Parameter für eine eventuelle Synthese bereitstellen. Die Parametermenge kann dabei sehr groß werden, so daß eine Eintragung von Hand nicht mehr praktikabel ist. Deshalb soll die Parametermenge vom Analysetool automatisch richtig besetzt werden, so daß diese vom Synthesetool ohne weitere Benutzereingriffe gelesen werden kann.

Bei der Synthese von Referenzstrings sind insbesondere zwei Modelle möglich, ein "independent reference model" (IRM) und ein "least recently used stack model" (LRU) (vgl. J.R. Spirn: "Program Behaviour: Models and Measurements" in Operating and Programming Systems Series, Elsevier Computer Science Library, Elsevier, New York, Oxford, Amsterdam, 1977).

Beim independent reference model wird ein Referenzstring charakterisiert durch die relativen Häufigkeiten, mit denen auf die einzelnen Speicherblöcke zugegriffen wird. Diese Häufigkeiten bilden eine sog. diskrete Blockverteilung, welche profiltreu reproduziert werden soll im generierten Referenzstring. Die Blockverteilung ist eine statische Eigenschaft des Referenzstrings. Bei der Synthese wird der Referenzstring generiert mit Hilfe eines Zufallsgenerators, welcher den generierten Referenzstring erzeugt, als eine Folge von Blöcken gemäß einer vorgegebenen Blockverteilung.

Beim least recently used stack model werden die im Referenzstring vorkommenden Blöcke in einem Stapel angeordnet, welcher auch Stack genannt wird. Beim Zugriff auf einen Block im Referenzstring wird der entsprechende Block im Stapel von seiner bisherigen Position entfernt.

Diese Position des Blockes im Stapel wird als eine Stackdistanz bezeichnet, wobei vom obersten Block des Stapels aus gezählt wird. Anschließend wird der entsprechende Block des Referenzstrings als oberster Block auf den Stapel gelegt. Somit entspricht die Reihenfolge der Blöcke im Stapel einer Ordnung nach dem Zeitpunkt des letzten Zugriffs. Als eine wesentliche Eigenschaft werden beim least recently used stack model die relativen Häufigkeiten betrachtet, mit denen auf die einzelnen Positionen im Stapel als Stackdistanzen zugegriffen wird. Diese Stackdistanzen bilden eine sog. diskrete Stackdistanzverteilung, welche profiltreu im Referenzstring reproduziert werden soll. Die Stackdistanzverteilung ist eine dynamische Eigenschaft des Referenzstrings. Bei der Synthese wird ein Referenzstring generiert als eine Folge von Blöcken, deren Stackdistanzen entsprechend einer vorgegebenen Stackdistanzverteilung mit Hilfe eines Zufallsgenerators generiert werden. Es wird ein Stapel benötigt, der die Blöcke enthält. Ein derartiger Stapel wird auch Stack genannt. Der im Stapel an der jeweils vom Zufallsgenerator gelieferten Stackdistanz befindliche Block wird als nächster Zugriff in den bis dahin generierten Referenzstring eingetragen. Dabei wird der Block von seiner bisherigen Position im Stapel entfernt und als oberster Block auf den Stapel gelegt. Bei einer Synthese eines Referenzstrings nach independent reference model (IRM) oder nach least recently used stack model (LRU) ist es erzielbar, daß die im jeweiligen Modell wichtige Eigenschaft des generierten Referenzstrings mit der Eigenschaft des gemessenen Referenzstrings möglichst gut übereinstimmt. Beim independent reference model ist dies die statische Eigenschaft der Blockverteilung. Beim least recently used stack model ist dies die dynamische Eigenschaft der Stackdistanzverteilung.

An den gemessenen Referenzstrings kann man feststellen, daß es einzelne aufeinanderfolgende Phasen gibt. Derartige Phasen lassen sich sehr gut, insbesondere mittels des least recently used stack model beschreiben. Die Ubergänge zwischen den Phasen lassen sich jedoch nicht durch das least recently used stack model beschreiben. Aus diesem Grund werden die Referenzstrings in zwei Ebenen modelliert, einem Mikromodell und einem Makromodell. Als ein Mikromodell ist jeweils eine Phase mittels des independent reference models oder mittels des least recently used stack model beschreibbar. Als ein Makromodell sind die Ubergänge zwischen den einzelnen Phasen beschreibbar. Somit ist ein Synthesetool insbesondere in eine Mikromodellebene und eine Makromodellebene strukturierbar.

Für viele Anwendungen, insbesondere bei der simulativen Bewertung moderner Multiprozessorsysteme, ist es wichtig, künstliche Referenzstrings zu erzeugen. Dabei soll sowohl eine vorgegebene Blockverteilung als auch eine vorgegebene Stackdistanzverteilung im generierten Referenzstring enthalten sein, und soll mit den vorgegebenen Verteilungen möglichst genau übereinstimmen. Ein nach dem independent referenz model generierter Referenzstring weist eine mit der Vorgabe übereinstimmende Blockverteilung auf, während seine Stackdistanzverteilung etwa gleichverteilt ist, also mit ungefähr gleicher relativer Häufigkeit für jede der Stackdistanzen. Ein nach dem least recently used stack model generierter Referenzstring weist eine übereinstimmende Stackdistanzverteilung auf, während seine Blockverteilung etwa gleichverteilt ist, also mit ungefähr gleicher relativer Häufigkeit für jeden der Blöcke. Beides entspricht nicht den Gegebenheiten realer Referenzstrings.

Ein Maß für die Qualität eines generierten Referenzstrings ist seine Ubereinstimmung mit einem gemessenen Referenzstring eines realen Systemlaufs. Dabei ist es relativ einfach, eine Übereinstimmung in einer einzelnen Eigenschaft zu erzielen, etwa der Blockverteilung mit dem independent reference model, oder der Stackdistanzverteilung mit dem least recently used stack model.

Als eine Aufgabe der Erfindung ist ein weiteres Verfahren anzugeben zum Generieren eines Referenzstrings.

Es soll ein Synthesealgorithmus insbesondere auf der Mikromodellebene eines Generators angegeben werden, durch den es ermöglicht wird, einen Referenzstring zu generieren, der gleichzeitig eine vorgegebene Blockverteilung und eine vorgegebene Stackdistanzverteilung aufweist.

Es soll als eine Eingabe eine diskrete Blockverteilung, eine diskrete Stackdistanzverteilung, eine natürliche Zahl und eine Liste vorgesehen sein, welche die verschiedenen Blöcke in der Reihenfolge ihres ersten Auftretens im Referenzstring enthält. In einer weiteren Liste soll zu jedem Block auch ein Zeitpunkt, also eine Position im Referenzstring, für das erste Auftreten des Blockes vermerkt sein. Der Synthesealgorithmus soll daraus einen Referenzstring mit einer Länge generieren, welche gleich ist der eingegebenen natürlichen Zahl. Die verschiedenen eingegebenen Blöcke sollen im generierten Referenzstring bei ihrem ersten Auftreten wie in der Liste vorgegeben sowie mit der eingegebenen Blockverteilung und mit der eingegebenen Stackdistanzverteilung enthalten sein, welche beispielsweise aus einem gemessenen Referenzstring entstammen.

Eine Lösung ist gegeben bei einem Verfahren zum Generieren eines Referenzstrings, bei welchem in den Referenzstring als ein Eintrag einer von Blöcken eingetragen wird, deren Blockhäufigkeiten und Stackdistanzhäufigkeiten aktualisiert werden, indem für die Blöcke Häufigkeitsquotienten der Blockhäufigkeit und Häufigkeitsquotienten der Stackdistanzhäufigkeit errechnet werden, so daß für den Eintrag einer der Blöcke ausgewählt wird anhand von den Häufigkeitsquotienten.

Der Erfindung liegt die Idee zugrunde, daß Blockhäufigkeiten und Stackdistanzhäufigkeiten aktualisierbar sind, so daß daraus Häufigkeitsquotienten ermittelbar sind, mittels welcher bestimmbar ist, welcher von den Blöcken am dringensten referenziert werden soll. Dieses Prinzip, welches ohne einen Zufallsgenerator arbeitet, und welches somit eine Bestimmung des nächsten Blockes anstelle einer Monte-Carlo-Auswahl vorsieht, ermöglicht es, einen überraschend profiltreuen Referenzstring zu generieren.

In einer besonders vorteilhaften Weise ist dadurch ein Referenzstring generierbar, welcher gleichzeitig eine vorgegebene Blockverteilung und eine vorgegebene Stackdistanzverteilung möglichst profiltreu aufweist.

Als ein Häufigkeitsquotient der Blockhäufigkeit für einen Block wird ein Quotient bezeichnet, bestehend aus einer Blockhäufigkeit, welche beim jeweils aktuellen Generierungsschritt im Referenzstring bereits für den betrachteten Block enthalten ist, dividiert durch einen Wert aus der diskreten Blockverteilung, welche profiltreu im Referenzstring reproduziert werden soll für den betrachteten Block. Als ein Häufigkeitsquotient der Stackhäufigkeit für einen Block wird ein Quotient bezeichnet, bestehend aus einer Stackdistanzhäufigkeit, welche beim jeweils aktuellen Generierungsschritt im Referenzstring bereits für den betrachteten Block enthalten ist, dividiert durch einen Wert aus der Stackdistanzverteilung, welche profiltreu im Referenzstring reproduziert werden soll für den betrachteten Block.

Beim jeweils aktuellen Generierungsschritt sollen für jeden der Blöcke des bereits generierten Referenzstrings deren Blockhäufigkeiten und Stackdistanzhäufigkeiten aktualisiert vorliegen. Als Blockhäufigkeit soll vermerkt sein, wie oft auf einen bestimmten Block bereits zugegriffen ist. Als eine Stackdistanzhäufigkeit soll vermerkt sein, wie oft auf eine bestimmte Stackdistanz bereits zugegriffen ist. Die Häufigkeitsquotienten der Blockhäufigkeit und die Häufigkeitsquotienten der Stackhäufigkeit sollen so normiert sein, daß sie miteinander vergleichbar sind, so daß mittels der Häufigkeitsquotienten ausgewählt werden kann.

Ausführbar ist ein bevorzugtes Verfahren, bei welchem gemäß einer Stackdistanzverteilung die Stackdistanzhäufigkeiten für einzutragende Blöcke beschränkt werden.

In einer besonders vorteilhaften Weise werden bei der Auswahl aus der Menge der bisher im Referenzstring generierten Blöcke jene Blöcke nicht zugelassen, die sich an einer Position im Stapel befinden, auf welche schon zu oft zugegriffen wurde. Es sollen somit jene Blöcke nicht in den Referenzstring ausgewählt und eingetragen werden, für welche durch einen Zugriff auf deren Position im Stapel ihre Stackdistanzhäufigkeit um mehr als eine vorgegebene Schranke ihren in der Stackdistanzverteilung angegebenen Wert überschreiten würde.

Ausführbar ist ein weiteres bevorzugtes Verfahren, bei welchem gemäß einer Blockverteilung die Blockhäufigkeiten für einzutragende Blöcke beschränkt werden.

In einer besonders vorteilhaften Weise werden bei der Auswahl aus der Menge der bisher im Referenzstring generierten Stackdistanzen jene Stackdistanzen nicht zugelassen, deren Block sich an einer solchen Position in Stapel befindet, so daß auf diesen Block schon zu oft zugegriffen wurde. Es sollen somit jene Blöcke nicht ausgewählt und in den Referenzstring eingetragen werden, für welche durch einen Zugriff auf deren Position im Stapel ihre Blockhäufigkeit um mehr als eine weitere vorgegebene Schranke ihren in der Blockverteilung angegebenen Wert überschreiten würde.

Ausführbar ist ein weiteres bevorzugtes Verfahren, bei welchem ein Normierungswert der Blockhäufigkeiten und ein Normierungswert der Stackdistanzhäufigkeiten aktualisiert werden, so daß nicht normierte Häufigkeitsquotienten ohne eine Berücksichtigung der Normierungswerte aktualisierbar und sortierbar sind.

In einer besonders vorteilhaften Weise können mittels der Normierungswerte für die Blöcke die Blockhäufigkeiten und die Stackdistanzhäufigkeiten miteinander verglichen werden. Der Normierungswert der Blockhäufigkeit soll durch eine Summenbildung erhalten werden, indem die Werte der Blockhäufigkeiten für jeden der Blöcke aufsummiert werden, welche im bisher generierten Referenzstring enthalten sind. Der Normierungswert der Stackdistanzhäufigkeiten soll durch eine Summenbildung erhalten werden, indem die Werte der Stackdistanzhäufigkeit für jede der Stackdistanzen aufsummiert werden, welche im bisher generierten Referenzstring enthalten sind. Vergleichbare Werte zur Stackdistanzhäufigkeit und zur Blockhäufigkeit können dabei so erhalten werden, daß für einen Block sein Wert für die Blockhäufigkeit dividiert wird durch den Normierungswert der Blockhäufigkeit, sowie daß sein Wert für die Stackdistanzhäufigkeit dividiert wird durch den Normierungswert der Stackdistanzhäufigkeit. Es sind daraus in besonders vorteilhafter Weise vergleichbare Häufigkeitsquotienten errechenbar. Wird beispielsweise als Blockhäufigkeit angegeben, wie oft beim jeweils aktuellen Generierungsschritt ein betrachteter Block im Referenzstring bereits enthalten ist, und wird als Stackdistanzhäufigkeit angegeben, wie oft beim jeweils aktuellen Generierungsschritt ein betrachteter Block mit einer Stackdistanz bereits enthalten ist, so kann der Häufigkeitsquotient der Blockhäufigkeit errechnet werden aus dem Produkt der Blockhäufigkeit und dem Normierungswert der Blockhäufigkeit dividiert durch den Wert der Blockverteilung für einen betrachteten Block. Ebenso kann für den betrachteten Block der Häufigkeitsquotient der Stackhäufigkeit errechnet werden als ein Produkt aus der Stackdistanzhäufigkeit und dem Normierungswert der Stackdistanzhäufigkeit dividiert durch den Wert der Stackdistanzverteilung für den betrachteten Block.

Es kann beispielsweise vorgesehen sein, daß nicht normierte Häufigkeitsquotienten aufbereitet und sortiert werden nach ihrem Wert. Es soll dabei in einer Liste für die nicht normierten Häufigkeitsquotientien der Blockhäufigkeit insbesondere an erster Stelle der jeweils kleinste aktuelle nichtnormierte Häufigkeitsquotient der Blockhäufigkeit enthalten sein. In einer weiteren Liste für die nichtnormierten Häufigkeitsquotienten der Stackdistanzhäufigkeit soll insbesondere an erster Stelle der jeweils kleinste aktuelle nichtnormierrte Häufigkeitsquotient der Stackdistanzhäufigkeit enthalten sein. In einer vorteilhaften Weise sind bei einer Änderung der Normierungswerte diese Listen ohne Normierung weiter verwendbar. Von Vorteil ist weiters, daß ein einzutragender Block erleichtert auswählbar ist anhand der sortierten Listen, in dem die beiden Häufigkeitsquotienten für einen zu prüfenden Block in den Listen sortiert eingetragen sind.

Mit dem Eintrag eines ausgewählten Blockes in die Referenzliste sind in vorteilhafter Weise die nicht normierten Häufigkeitsquotienten der Blockhäufigkeit sowie der Stackdistanzhäufigkeit für diesen Block zu aktualisieren und in den beiden Listen neu.einzusortieren.

Ausführbar ist ein weiteres bevorzugtes Verfahren, bei welchem mittels einer Positionsliste festgelegt wird, welcher der Einträge ein neuer Block ist.

In einer besonders vorteilhaften Weise kann ein neuer Block in den bereits generierten Referenzstring eingetragen werden, indem anhand einer Positionsliste eine Position im Referenzstring überprüft wird. Dabei soll geprüft werden, ob auf einen neuen, bisher im Referenzstring nicht enthaltenen Block zugegriffen werden soll. Sobald im Referenzstring auf einen neuen Block zugegriffen wird, soll der Normierungswert der Blockverteilung und der Normierungswert der Stackdistanzverteilung aktualisiert werden.

Ausführbar ist ein weiteres bevorzugtes Verfahren, bei welchem ein Blockstapel aktualisiert wird, indem ein zuletzt eingetragener Block an eine oberste Stapelposition gesetzt wird.

In einer besonders einfachen Weise können mittels des Blockstapels Stackdistanzen ermittelt werden.

Ausführbar ist ein weiteres bevorzugtes Verfahren, bei welchem im Blockstapel Blöcke in einer Reihenfolge initialisiert eingetragen werden, welche der Positionsliste für die neuen Blöcke entspricht.

In einer besonders einfachen Weise kann so ein Blockstapel angelegt werden, welcher so initialisierbar ist, daß alle Blöcke bereits von Anfang an enthalten sind. Der Blockstapel soll in der selben Reihenfolge vorbelegt werden, wie die Blöcke in der vorgebbaren Liste enthalten sind, welche die verschiedenen Blöcke in der Reihenfolge ihres ersten Auftretens im Referenzstring enthält. Die Höhe des Blockstapels entspricht dabei der Länge dieser vorgebbaren Liste. Der erste Block im Referenzstring liegt somit oben auf dem Blockstapel auf. Soll in der Folge auf einen neuen Block im Referenzstring zugegriffen werden, so ist dies auch gleichbedeutend mit einer neuen Stackdistanz.

Die Erfindung wird anhand der Figuren näher erläutert, in welchen Ausführungsbeispiele enthalten sind.

In Zusammenhang mit den Figuren und der Beschreibung wird folgende Bezugszeichentabelle verwendet.

Bezugszeichentabelle:

BV     diskrete Blockverteilung, welche profiltreu reproduziert werden soll im Referenzstring

SV     diskrete Stackdistanzverteilung, welche profiltreu reproduziert werden soll im Referenzstring

BL     Blockliste, welche die einzelnen Blöcke des Referenzstrings enthält in der Reihenfolge ihres ersten Auftretens im Referenzstring

PL     Positionsliste, welche die Position der einzelnen Blöcke im Referenzstring enthält bei ihrem ersten Auftreten im Referenzstring

P     Position der einzelnen Blöcke im Referenzstring bei ihrem ersten Auftreten im Referenzstring

BH     Blockhäufigkeiten, welche beim jeweils aktuellen Generierungsschritt im Referenzstring bereits enthalten sind

SH     Stackdistanzhäufigkeiten, welche beim jeweils aktuellen Generierungsschritt im Referenzstring bereits enthalten sind

BS     Blockstapel, welcher insbesondere die bereits im Referenzstring enthaltenen Blöcke enthält

QB     Häufigkeitsquotient der Blockhäufigkeit

QLB     nicht normierter Häufigkeitsquotient der Blockhäufigkeit

LB     Liste der nicht normierten Häufigkeitsquotienten der Blockhäufigkeit

GZB     Grenzwert zur Beschränkung von eintragbaren Blöcken, betreffend deren Blockhäufigkeit

QS     Häufigkeitsquotient der Stackdistanzhäufigkeit

QLS     nicht normierter Häufigkeitsquotient der Stackdistanzhäufigkeit

LS     Liste der nicht normierten Häufigkeitsquotienten der Stackdistanzhäufigkeit

GZS    Grenzwert zur Beschränkung von eintragbaren Blöcken, betreffend deren Stackdistanzhäufigkeit

QX    ausgewählter Häufigkeitsquotient

NB    Normierungswert der Blockhäufigkeit

NQB    Normierungswert der Häufigkeitsquotienten der Blockhäufigkeit

NS    Normierungswert der Stackdistanzhäufigkeit

NQS    Normierungswert der Häufigkeitsquotienten der Stackdistanzhäufigkeit

N    Eintragsanzahl

B    Block

S    Stackdistanz

RS    Referenzstring

V    Verfahrensschritt

Die Figur 1 zeigt einen Verfahrensschritt eines Generierungsverfahrens zum Generieren eines Referenzstrings.
Die Figur 2 zeigt einen Verfahrensschritt des Generierungsverfahrens zum Auswählen eines einzutragenden Blockes.
Die Figur 3 zeigt einen Verfahrensschritt zum Auswählen eines ersten eintragbaren Blockes.
Die Figur 4 zeigt einen Verfahrensschritt zum Auswählen eines zweiten eintragbaren Blockes.
Die Figur 5 zeigt einen Verfahrensschritt zum Auswählen des ersten oder zweiten eintragbaren Blockes als den einzutragenden Block.

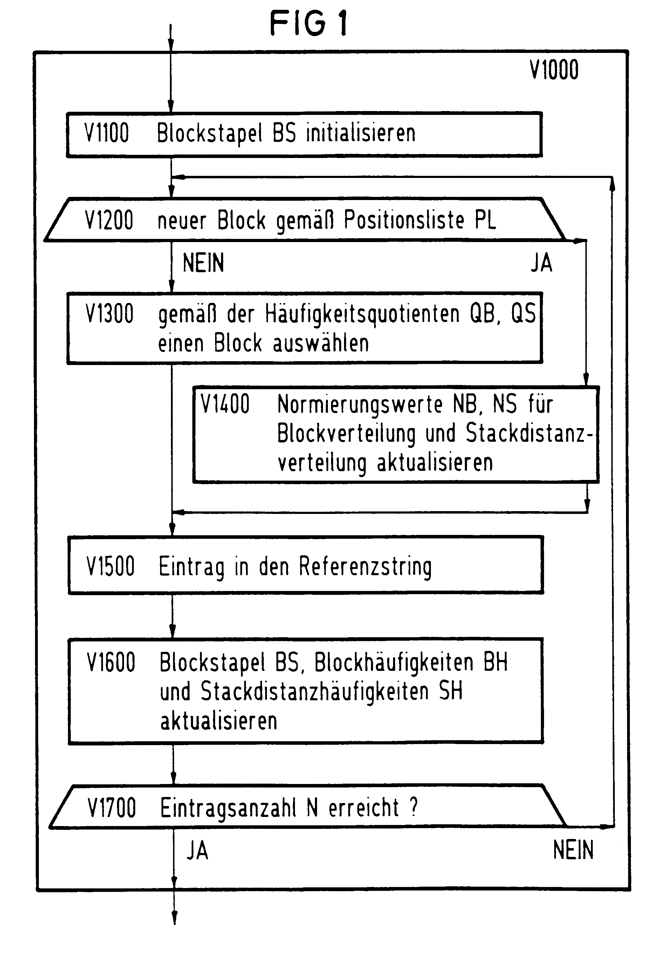

Wie die Figur 1 zeigt, besteht ein Ausführungsbeispiel für einen Verfahrensschritt V1000 eines Generierungsverfahrens zum Generieren eines Referenzstrings aus Verfahrensschritten V1100, V1200, V1300, V1400, V1500, V1600 und V1700.

Beim Verfahrensschritt V1000 des Generierungsverfahrens wird zunächst der Verfahrensschritt V1100 ausgeführt.

Es wird eine vorgesehene Eintragsanzahl N aufbereitet. Diese gibt an, wieviele einzelne Blöcke der zu generierende Referenzstring als Einträge erhalten soll.

Es wird eine Blockliste BL aufbereitet. Diese enthält die einzelnen Blöcke des zu generierenden Referenzstrings in der Reihenfolge ihres ersten Auftretens im zu generierenden Referenzstring.

Es wird eine Positionsliste PL aufbereitet. Diese enthält die Position der einzelnen Blöcke im zu generierenden Referenzstring bei ihrem ersten Auftreten im zu generierenden Referenzstring.

Es wird eine Blockverteilung BV aufbereitet. Diese enthält zu jedem Block der Blockliste jeweils einen vorgegebenen Wert, welcher angibt, mit welcher Wahrscheinlichkeit der jeweilige Block im zu generierenden Referenzstring enthalten sein soll.

Es wird eine Stackdistanzverteilung SV aufbereitet. Diese enthält zu jeder Stackdistanz von Blöcken im zu generierenden Referenzstring jeweils einen vorgegebenen Wert, welcher angibt, mit welcher Wahrscheinlichkeit die jeweilige Stackdistanz im zu generierenden Referenzstring enthalten sein soll.

Es werden die Blockhäufigkeiten BH initialisiert. Zu jedem Block der Blockliste BL und damit zu jedem Block der vorgegebenen Blockverteilung BV sowie für deren Normierungswert NB wird als ein aktueller Wert jeweils der Wert Null eingetragen.

Es werden die Stackdistanzhäufigkeiten SH initialisiert. Zu jeder Stackdistanz von Blöcken im zu generierenden Referenzstring und damit zu jeder Stackdistanz der vorgegebenen Stackdistanzverteilung SV, sowie für deren Normierungswert NS wird als ein aktueller Wert jeweils der Wert Null eingetragen.

Es wird ein Blockstapel BS initialisiert. Beginnend an einer obersten Position im Blockstapel werden die Blöcke der Blockliste in den Blockstapel eingetragen in einer Reihenfolge, welche der Blockliste entnehmbar ist, und welche der Reihenfolge ihres ersten Auftretens im zu generierenden Referenzstring entspricht.

Danach folgt ein Verfahrensschritt V1200. Es wird die Positionsliste PL geprüft. Falls anhand der Positionsliste erkannt wird, daß ein neuer Block in den zu generierenden Referenzstring einzutragen ist, so folgt ein Verfahrensschritt V1400. Anderenfalls folgt ein Verfahrensschritt V1300.

Falls kein neuer Block gemäß Positionsliste PL in den zu generierenden Referenzstring eingetragen werden soll, folgt der Verfahrensschritt V1300. Es werden nur jene im bereits generierten Referenzstring enthaltenen Blöcke betrachtet. Für diese Blöcke wird deren Häufigkeitsquotient QB der Blockhäufigkeit betrachtet. Ebenso wird für diese Blöcke deren Häufigkeitsquotient QS der Stackhäufigkeit betrachtet. Aus den betrachteten Häufigkeitsquotienten QB und QS wird der Häufigkeitsquotient QX ausgewählt. Als ein ausgewählter Block für einen Eintrag in den zu generierenden Referenzstring wird bei einem ausgewählten Häufigkeitsquotienten QB der Blockhäufigkeit anhand deren Blockhäufigkeit der jeweils zugeordnete Block aus der Blockliste entnommen. Als ein ausgewählter Block für einen Eintrag im zu generierenden Referenzstring wird bei einem ausgewählten Häufigkeitsquotienten QS der Stackdistanzhäufigkeit anhand der jeweiligen Stackdistanz der Block aus dem Blockstapel entnommen. Der jeweils ausgewählte Block wird vermerkt und es folgt ein Verfahrensschritt V1500.

Falls gemäß der Positionsliste PL erkannt wird, daß ein neuer Block in den zu generierenden Referenzstring einzutragen ist, folgt der Verfahrensschritt V1400. Es wird der Normierungswert NB für die Blockhäufigkeit aktualisiert, indem der für den neuen Block in der Blockverteilung vorgegebene Wert zum Normierungswert NB der Blockverteilung hinzugezählt wird. Es wird der Normierungswert NS für die Stackdistanzhäufigkeit aktualisiert, indem der für den neuen Block in der Stackdistanzverteilung vorgegebene Wert dem Normierungswert NS der Stackdistanzhäufigkeit hinzugezählt wird. Als ausgewählter Block für einen Eintrag in den Referenzstring wird der neue Block vermerkt, welcher anhand der Positionsliste aus der Blockliste entnommen wird. Es folgt der Verfahrensschritt V1500.

Beim Verfahrensschritt V1500 erfolgt als ein Eintrag in den Referenzstring jener ausgewählte Block, welcher im Verfahrensschritt V1300 oder im Verfahrensschritt V1400 vermerkt ist.

Es folgt der Verfahrensschritt V1600. Der ausgewählte Block wird aus seiner Position im Blockstapel BS entnommen, wobei seine Stackdistanz vermerkt wird. Für diese Stackdistanz wird deren Stackdistanzhäufigkeit SH sowie deren Häufigkeitsquotient QS der Stackdistanzhäufigkeit aktualisiert. Für den aus dem Blockstapel BS entnommenen Block wird dessen Blockhäufigkeit BH sowie dessen Häufigkeitsquotient QB der Blockhäufigkeit aktualisiert. Der Blockstapel BS wird aktualisiert, indem der entnommene Block an die oberste Position des Blockstapels BS gegeben wird.

Es kann beispielsweise vorgesehen sein, daß nicht normierte Häufigkeitsquotienten QLB und QLS aufbereitet und sortiert werden nach ihrem Wert. Es soll dabei in einer Liste LB für die nicht normierten Häufigkeitsquotienten QLB der Blockhäufigkeit an erster Stelle der jeweils kleinste aktuelle Häufigkeitsquotient QLB der Blockhäufigkeit enthalten sein. In einer Liste LS für die Häufigkeitsquotienten QLS der Stackinstanzhäufigkeit soll an erster Stelle der jeweils kleinste nicht aktuelle normierte Häufigkeitsquotient QLS enthalten sein. Die Listen LB und LS sind insbesondere bei Verfahrensschritt V1300 verwendbar zum erleichterten Auffinden eines einzutragenden Blockes. Beim Verfahrensschritt V1600 ist es bei einer Verwendung der Liste LB und LS lediglich erforderlich für den in den Referenzstring zuletzt eingetragenen Block, dessen nicht normierte Häufigkeitsquotienten QLB und QLS zu aktualisieren und in den Listen LB und LS neu einzusortieren.

Es folgt der Verfahrensschritt V1700. Es wird überprüft, ob die vorgesehene Eintragsanzahl N erreicht ist. Falls die Anzahl der im bereits generierten Referenzstring eingetragenen Blöcke kleiner ist als die eingegebene Eintragsanzahl N, so folgt der Verfahrensschritt V1200. Anderenfalls ist bereits ein Referenzstring generiert mit einer Anzahl von Blöcken, welche gleich ist der vorgegebenen Eintragsanzahl N, und es wird der Verfahrensschritt V1000 beendet.

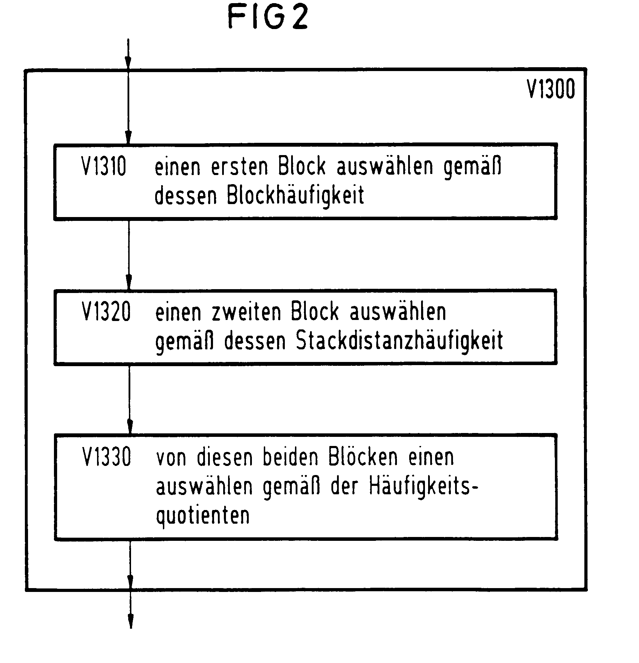

Wie die Figur 2 zeigt, besteht ein Ausführungsbeispiel für den Verfahrensschritt V1300 zum Auswählen des kleinsten Häufigkeitsquotienten aus den Verfahrensschritten V1310, V1320, sowie V1330.

Zunächst folgt der Verfahrensschritt V1310. Es wird ein erster Block ausgewählt gemäß dessen Blockhäufigkeit. Dies soll anhand der Häufigkeitsquotienten QB für die Blockhäufigkeit erfolgen. Es sollen die einzelnen Blöcke in einer Reihenfolge geprüft werden, beginnend mit dem Block mit dem niedrigsten Häufigkeitsquotienten QB. Für diesen Block soll aus dem Blockstapel BS, dessen Stackdistanz ermittelt werden. Für diese Stackdistanz soll deren Stackdistanzhäufigkeit geprüft werden, insbesondere ob sie zu groß ist. Falls dies der Fall ist, soll der Block mit dem nächst höheren Häufigkeitsquotienten QB geprüft werden. Für diesen Block soll ebenso aus dem Blockstapel dessen Stackinstanz ermittelt werden. Für diese Stackdistanz soll ebenso geprüft werden, ob deren Stackdistanzhäufigkeit zu groß ist. Es soll jener Block als ein erster auswählbarer Block ausgewählt werden, dessen Stackdistanzhäufigkeit nicht zu groß ist, sowie dessen Blockhäufigkeit möglichst niedrig ist.

Es folgt der Verfahrensschritt V1320. Es wird ein zweiter Block ausgewählt gemäß dessen Stackdistanzhäufigkeit. Dabei sollen die Stackdistanzhäufigkeiten geprüft werden. Beginnend mit jener Stackdistanz, welche den niedrigste Stackdistanzhäufigkeitsquotienten QS aufweist, soll aus dem Blockstapel BS für diese Stackdistanz der Block ermittelt werden. Für diesen Block soll dessen Blockhäufigkeit geprüft werden, ob sie zu groß ist. Falls dies der Fall ist, soll eine nächste Stackdistanz geprüft werden mit einem nächst höheren Häufigkeitsquotienten QS der Stackdistanzhäufigkeit. Für diese Stackdistanz soll ebenso aus dem Blockstapel BS der Block ermittelt werden. Für diesen Block soll ebenso geprüft werden, ob dessen Blockhäufigkeit zu groß ist. Es soll jene Stackdistanz ausgewählt werden, welche einen möglichst niedrigen Häufigkeitsquotienten QS der Stackdistanzhäufigkeit aufweist, und deren Block eine Blockhäufigkeit aufweist, welche nicht zu groß ist. Zu dieser geprüften Stackdistanz soll deren Block als der zweite auswählbare Block ausgewählt werden.

Es folgt der Verfahrensschritt V1330. Von den beiden auswählbaren Blöcken soll einer als ein einzutragenoer Block ausgewählt werden gemäß ihrer Häufigkeitsquotienten. Für den ersten Block soll dessen Häufigkeitsquotient QB der Blockhäufigkeit geprüft werden. Für den zweiten Block soll dessen Häufigkeitsquotient QS der Stackdistanzhäufigkeit geprüft werden. Falls der Häufigkeitsquotient QB kleiner ist als der Häufigkeitsquotient QS, soll der erste Block ausgewählt werden. Anderenfalls soll der zweite Block ausgewählt werden.

Der Verfahrensschritt V1300 wird beendet.

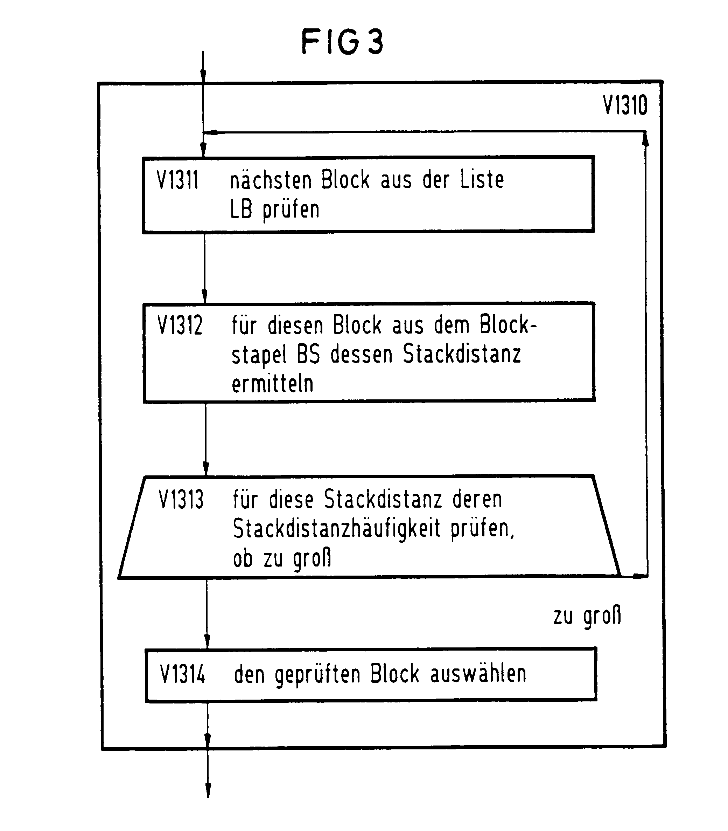

Wie die Figur 3 zeigt, besteht ein Ausführungsbeispiel für den Verfahrensschritt V1310 aus den Verfahrensschritten V1311, V1312, V1313, sowie V1314.

Es folgt der Verfahrensschritt V1311. Es wird eine Liste LB der Häufigkeitsquotienten der Blockhäufigkeit verwendet. In der Liste LB sind enthalten die nicht normierten Häufigkeitsquotienten QLB der Blockhäufigkeit nach ihrem Wert aufsteigend sortiert. An erster Stelle befindet sich der nicht normierte Häufigkeitsquotient QLB mit dem niedrigsten Wert. Zu jedem Block des bereits generierten Referenzstrings ist in der Liste LB ein nicht normierter Häufigkeitsquotient QLB der Blockhäufigkeit enthalten. Beginnend mit dem Block, dessen nicht normierter Häufigkeitsquotient QLB am kleinsten ist, wird nach einem auswählbaren Block gesucht.

Es folgt der Verfahrensschritt V1312. Für den zu prüfenden Block wird aus dem Blockstapel BS dessen Stackdistanz ermittelt.

Es folgt der Verfahrensschritt V1313. Für die ermittelte Stackdistanz wird deren Stackdistanzhäufigkeit geprüft, ob diese zu groß ist.

Falls dies der Fall ist, folgt der Verfahrensschritt V1311, und es wird der nächst Block geprüft mit dem aus der Liste LB entnommenen nächst höheren nicht normierten Häufigkeitsquotienten QLB.

Anderenfalls erfolgt der Verfahrensschritt V1314. Der geprüfte Block wird ausgewählt.

Der Verfahrensschritt V1310 ist beendet.

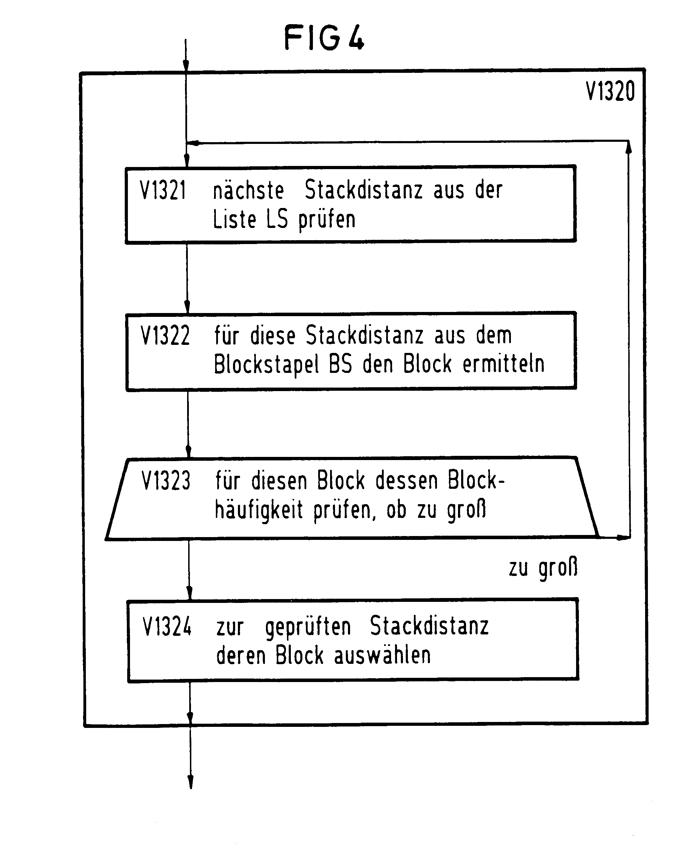

Wie die Figur 4 zeigt, besteht ein Ausführungsbeispiel für den Verfahrensschritt V1320 aus den Verfahrensschritten V1321, V1322, V1323, sowie V1324.

Es wird der Verfahrensschritt V1321 ausgeführt. Es wird eine Liste LS der nicht normierten Häufigkeitsquotienten QLS der Stackdistanzhäufigkeit verwendet. In dieser Liste sind enthalten die nicht normierten Häufigkeitsquotienten QLS der Stackdistanzhäufigkeit nach ihrem Wert aufsteigend sortiert. An erster Stelle befindet sich der niedrigste Häufigkeitsquotient QLS der Stackdistanzhäufigkeit. Zum jeweiligen nicht normierten Häufigkeitsquotienten QLS der Stackdistanzhäufigkeit wird jeweils dessen Stackdistanz geprüft.

Es folgt der Verfahrensschritt V1322. Für die zu prüfende Stackdistanz wird aus dem Blockstapel BS deren Block ermittelt.

Es folgt der Verfahrensschritt V1323. Für den ermittelten Block wird dessen Blockhäufigkeit geprüft, ob diese zu groß ist.

Falls dies der Fall ist, folgt der Verfahrensschritt V1321, und es wird die nächste Stackdistanz untersucht mit einem nächsthöheren Häufigkeitsquotienten QLS der Stackdistanzhäufigkeit.

Anderenfalls folgt der Verfahrensschritt V1324. Zur geprüften Stackdistanz wird deren Block ausgewählt.

Der Verfahrensschritt V1320 ist beendet.

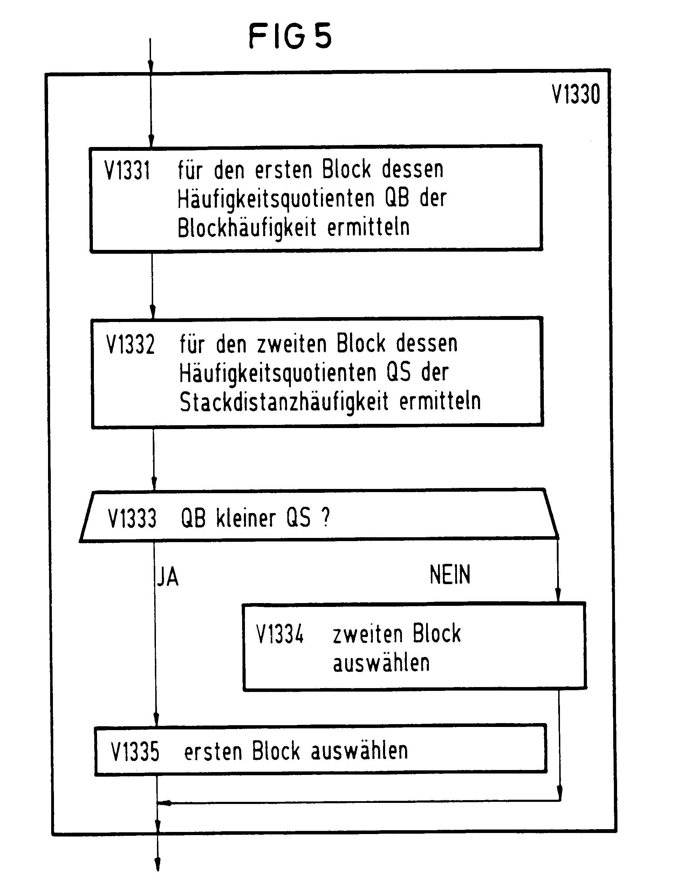

Wie die Figur 5 zeigt, besteht ein Ausführungsbeispiel für den Verfahrensschritt V1330 aus den Verfahrensschritten V1331, V1332, V1333, V1334 sowie V1335.

Es wird der Verfahrensschritt V1331 ausgeführt. Es wird für den ersten auswählbaren Block, welcher im Verfahrensschritt V1310 ermittelt worden ist, dessen Häufigkeitsquotient QB der Blockhäufigkeit ermittelt.

Es folgt der Verfahrensschritt V1332. Es wird für den zweiten auswählbaren Block, welcher im Verfahrensschritt V1320 ermittelt worden ist, dessen Häufigkeitsquotient QS der Stackdistanzhäufigkeit ermittelt.

Es folgt der Verfahrensschritt V1333. Es wird der Häufigkeitsquotient QB der Blockhäufigkeit für den ersten auswählbaren Block verglichen mit dem Häufigkeitsquotienten QS der Stackdistanzhäufigkeit für den zweiten auswählbaren Block. Falls der Häufigkeitsquotient QB der Blockhäufigkeit für den ersten auswählbaren Block kleiner ist als der Häufigkeitsquotient QS der Stackdistanzhäufigkeit für den zweiten auswählbaren Block, so folgt der Verfahrensschritt V1335, anderenfalls folgt der Verfahrensschritt V1334.

Falls der Häufigkeitsquotient QB der Blockhäufigkeit für den ersten auswählbaren Block nicht kleiner ist als der Häufigkeitsquotient QS der Stackdistanzhäufigkeit für den zweiten auswählbaren Block, so folgt der Verfahrensschritt V1334. Es wird der zweite auswählbare Block ausgewählt, und der Verfahrensschritt V1330 wird beendet.

Falls der Häufigkeitsquotient QB der Blockhäufigkeit für den ersten auswählbaren Block kleiner ist als der Häufigkeitsquotient QS der Stackdistanzhäufigekeit für den zweiten auswählbaren Block, so folgt der Verfahrensschritt V1335. Es wird der erste auswählbare Block ausgewählt, und der Verfahrensschritt V1330 wird beendet.

Die Tabelle 1 zeigt ein Ausführungsbeispiel für eine Aufbereitung nach einem Ausführen des Verfahrensschrittes V1100.

Tabelle 1

|  |  | N = 3; GZB = 0,01; GZS = 0,01; |
| --- | --- | --- |
|  | BL | B1; B2; B3; B4; ..... |
|  | PL | P1=1; P2=2; P3=4; P4=7; ..... |
|  | BV | BV1=0,25; BV2=0,20; BV3=0,15; BV4=0,10; ..... |
|  | SV | SV1=0,50; SV2=0,20; SV3=0,10; SV4=0,05; ..... |
|  | BS | B1; B2; B3; B4; ..... |

Aufbereitet ist eine Eintragsanzahl N=3 von Blöcken, welche in den zu generierenden Referenzstring eingetragen werden sollen.

Aufbereitet ist ein Grenzwert GZB = 0,01 zur Beschränkung von eintragbaren Blöcken betreffend deren Blockhäufigkeit. Ebenso aufbereitet ist ein Grenzwert GZS = 0,01 zur Beschränkung von eintragbaren Blöcken betreffend deren Stackdistanzhäufigkeit. Eine Berücksichtigung dieser Grenzwerte GZB und GZS kann beispielsweise additiv vorgesehen sein. Bei der Blockverteilung ist in diesem Fall GZB + BVj/NB als Grenze zu berücksichtigen.

Die Grenzwerte GZB und GZS können beispielsweise auch multiplikativ berücksichtigt sein. Bei der Blockverteilung ist in diesem Fall BVj (1+GZB)/NB als Grenze zu berücksichtigen. Dabei wird die Grenze relativ zu jeweiligen Wert der Blockverteilung BVj errechnet, sodaß der Grenzwert GZB wie bei einer Prozentangabe benutzt wird. Bei sehr vielen Anwendungsfällen werden die Grenzwerte GZB und GZS multiplikativ berücksichtigt. Beim Auswählen von Blöcken für einen Eintrag in den Referenzstring sollen nur solche Blöcke als auswählbar gelten, für welche zumindest eine von folgenden Relationen gilt:

BHj/BVj kleiner NQB(BVj(1+GZB)/NB)

SHj/SVj kleiner NQS(SVj(1+GZS)/NS)

Der Normierungswert NB der Blockhäufigkeit und der Normierungswert NS der Stackdistanzhäufigkeit sind durch eine Summenbildung für die bereits im Referenzstring eingetragenen Blöcke wie folgt zu erhalten:

$$NB = \Sigma_j \ BVj$$

$$NS = \Sigma_j \ SVj$$

Der Normierungswert NQB der Häufigkeitsquotienten der Blockhäufigkeit und der Normierungswert NQS der Häufigkeitsquotienten der Stackdistanzhäufigkeit sind durch Summenbildung für die im Referenzstring bereits eingetragenen Blöcke wie folgt zu erhalten:

$$NQB = \Sigma_j \ BHj/Bvi = \Sigma_j \ QLBj$$

$$NQS = \Sigma_j \ SHj/SVj = \Sigma_j \ QLSj$$

Der nicht normierte Häufigkeitsquotient QLB der Blockhäufigkeit und der nicht normierte Häufigkeitsquotient QLS der Stackdistanzhäufigkeit sind wie folgt zu errechnen:

$$QLBj = BHj/BVj$$

$$QLSj = SHj/SVj$$

Mit Hilfe einer Anzahl ANZ von bereits in den Referenzstring eingetragenen Blöcken sowie mit Hilfe der Normierungswerte NB und NS können die Normierungswerte NQB und NQS näherungsweise geschätzt werden, sodaß deren Errechnung in Form einer Schätzung in einer einfachen Weise erfolgen kann:

$$NQB \doteq \frac{\Sigma_j \; BHj}{\Sigma_j \; BV_j} = \frac{ANZ}{NB}$$

$$NQB \doteq \frac{\Sigma_j \; SHj}{\Sigma_j \; SVj} = \frac{ANZ}{NS}$$

Normalerweise wird die Blockverteilung und die Stackdistanzverteilung so vorgesehen, daß für ein beliebig großes j der Normierungswert NB und NS dem Wert Eins beliebig nahekommt. Demzufolge kann näherungsweise bei einer Schätzung insbesondere für eine vorteilhaft leichte Errechnung in diesem Fall ein Wert gleich Eins vorgegeben werden für den Normierungswert NB und NS, sodaß beim Auswählen von Blöcken für einen Eintrag als Schätzung näherungsweise folgende Relationen gelten:

BHj/BVj kleiner ANZ(1+GZB)BVj

SHj/SVj kleiner ANZ(1+GZS)SVj

Gemäß Tabelle 1 ist eine Blockliste BL aufbereitet. Diese enthält die Blöcke in der Reihenfolge ihres ersten Auftretens im zu generierenden Referenzstring.

Gemäß Tabelle 1 ist eine Positionsliste PL aufbereitet. Diese enthält die Positon Pj der einzelnen Blöcke im Referenzstring bei ihrem ersten Auftreten im Referenzstring.

Gemäß Tabelle 1 aufbereitet ist eine diskrete Blockverteilung BV. Diese enthält für jeden Block dessen Blockverteilung BVj, welche profiltreu im Referenzstring reproduziert werden soll.

Gemäß Tabelle 1 aufbereitet ist eine diskrete Stackdistanzverteilung SV. Zu jeder Stackdistanz ist eine Stackdistanzverteilung SVj aufbereitet, welche profiltreu im Referenzstring reproduziert werden soll.

Gemäß Tabelle 1 aufbereitet ist ein Blockstapel BS. Dieser ist so initialisiert, daß er die einzelnen Blöcke in der Reihenfolge ihres ersten Auftretens im Referenzstring enthält.

Beim Verfahrenschritt V1200 wird die Positionsliste PL geprüft. Aufgrund des Eintrages für die Position P1 = 1 wird erkannt, daß an erster Stelle im Referenzstring der Block B1 einzutragen ist.

Es folgt der Verfahrensschritt V1400. Es wird der Normierungswert NB der Blockhäufigkeit aufbereitet gemäß NB =BV1 = 0,25. Es wird der Normierungswert NS der Stackdistanzhäufigkeit aufbereitet gemäß NS = SV1 = 0,5.

Es folgt der Verfahrensschritt V1500. Es wird der Block B1 in den Referenzstring RS eingetragen.

Es folgt der Verfahrensschritt V1600. Es wird der Blockstapel BS aktualisiert. Der Block B1 verbleibt an erster Stelle im Blockstapel BS.

Dies bedeutet eine Stackdistanz gleich 1. Es ist definitionsgemäß zu vereinbaren, ob bei einem Eintrag von einem neuen Block in den Referenzstring eine neue Stackdistanz gezählt wird oder nicht. Dies soll insbesondere in Abhängigkeit von einem beispielsweise zu simulierenden Speichersystem definiert und vorgegeben werden. Falls beispielsweise Speicherblöcke als ein Betriebsmittel reservierbar und freigebbar sein sollen, kann es vorgesehen sein, daß mit dem Eintrag eines neuen Blockes in den Referenzstring auch eine neue Stackdistanz vermerkt werden soll. Ebenso kann beispielsweise bei einer sequentiellen Bearbeitung von Speicherblöcken vorgesehen sein, daß bei einem Eintrag eines neuen Blockes in den Referenzstring keine neue Stackdistanz vermerkt wird. Dieses kann auch in einer umgekehrten Weise oder anders definiert sein.

Bei diesem Ausführungsbeispiel soll bei einem Eintrag eines neuen Blockes in den Referenzstring dessen Stackdistanz vermerkt werden. Für den Block B1 wird dessen Stackdistanzhäufigkeit SH1 = 1 vermerkt. Ebenso wird die Blockhäufigkeit BH1 = 1 vermerkt.

Bei diesem Ausführungsbeispiel ist eine Verwendung der Listen LB und LS vorgesehen, in welchen nicht normierte Häufigkeitsquotienten QLB und QLS sortiert enthalten sind. Für den Block B1 wird dessen nicht normierter Häufigkeitsquotient QLB1 = BH1/BV1 = 4 ermittelt und vermerkt. Ebenso wird für die Stackdistanz S1 der nicht normierte Häufigkeitsquotient QLS1 = SH1/SV1 = 2 ermittelt und vermerkt. Es wird der Normierungswert NQB = QLB1 = 4 der nicht normierten Häufigkeitsquotienten QLB der Blockhäufigkeit ermittelt und vermerkt. Es wird der Normierungswert NQS = QLS1 = 2 der nicht normierten Häufigkeitsquotienten QLS der Stackdistanzhäufigkeit ermittelt und vermerkt.

Nach Ausführung des Verfahrensschrittes V1600 ergibt sich eine Aufbereitung gemäß Tabelle 2.

Tabelle 2

| RS | B1; |
|----|-----|
| BS | B1; B2; B3; B4; ..... |
| SH | SH1 = 1; |
| BH | BH1 = 1; |

Tabelle 2   (fortgesetzt)

| LB | QLB1 = BH1/BV1 = 4; |
|----|---------------------|
| LS | QLS1 = SH1/SV1 = 2; |
|    | NB = 0,25; NS = 0,50; NQB = 4; NQS = 2 |

Es folgt der Verfahrensschritt V1700. Es wird erkannt, daß im Referenzstring eine Eintragsanzahl N = 3 noch nicht erreicht ist. Es folgt der Verfahrensschritt V1200. Anhand der Positionsliste PL, insbesondere anhand des Eintrages P2 =2, wird erkannt, daß an der zweiten Stelle im Referenzstring der Block B2 einzutragen ist. Es folgt der Verfahrensschritt V1400. Es wird der Normierungswert NB = BV1+ BV2 = 0,25 + 0,2 = 0,45 ermittelt und vermerkt. Es wird der Normierungswert NS = SV1 + SV2 = 0,5 + 0,2 = 0,7 ermittelt und vermerkt. Es folgt der Verfahrensschritt V1500. Es wird der Block B2 in den Referenzstring RS eingetragen.

Es folgt der Verfahrensschritt V1600. Es wird der Blockstapel BS aktualisiert. Es wird erkannt, daß der zuletzt eingetragene Block B2 mit einer Stackdistanz S2 im Blockstapel enthalten ist. Der Block B2 wird an die erste Stelle des Blockstapels BS gesetzt. Gemäß der Stackdistanz S2 wird deren Stackdistanzhäufigkeit SH2 = 1 aktualisiert. Es wird für den Block B2 dessen Blockhäufigkeit BH2 = 1 aktualisiert. Es wird für den Block B2 dessen nicht normierter Häufigkeitsquotient QLB2 = BH2/BV2 = 5 ermittelt und in die Liste LB einsortiert. Es wird zur Stackdistanz S2 deren nicht normierter Häufigkeitsquotient QLS2 = SH2/SV2 = 5 ermittelt und in die Liste LS einsortiert. Es wird der Normierungswert NQB = QLB1 + QLB2 = 4 + 5 = 9 ermittelt und vermerkt. Es wird der Normierungswert NQS = QLS1 + QLS2 = 2 + 5 = 7 ermittelt und vermerkt. Nach der Ausführung des Verfahrensschrittes V1600 liegt eine Aufbereitung gemäß Tabelle 3 vor.

Tabelle 3

| RS | B1; B2; |
|----|---------|
| BS | B2; B1; B3; B4; ..... |
| SH | SH1 = 1; SH2 = 1; |
| BH | BH1 = 1; BH2 = 1; |
| LB | QLB1 = 4; QLB2 = 5; |
| LS | QLS1 = 2; QLS2 = 5; |
|    | NB = 0,45; NS = 0,70; NQB = 9; NQS = 7 |

Es folgt der Verfahrensschritt V1700. Es wird erkannt, daß die Eintragsanzahl N = 3 noch nicht erreicht ist. Es folgt der Verfahrensschritt V1200. Anhand der Positionsliste PL wird aufgrund des Eintrages P3 = 4 erkannt, daß der Block B3 an der vierten Stelle im Referenzstring eingetragen werden soll. An der dritten Stelle im Referenzstring soll also ein Block in den Referenzstring eingetragen werden, welcher im Referenzstring RS bereits enthalten ist.

Es folgt der Verfahrensschritt V1300. Es wird der Verfahrens-schritt V1310 ausgeführt. Dabei wird der Verfahrens-schritt V1311 ausgeführt. Es wird die Liste LB untersucht. Beginnend mit dem niedrigsten nicht normierten Häufigkeitsquotienten QLB1 = 4 wird zunächst der Block B1 geprüft. Es folgt der Verfahrensschritt V1312. Für den Block B1 wird anhand des Blockstapels BS die Stackdistanz für den Block B1 ermittelt. Der Block B1 ist im Blockstapel BS mit der Stackdistanz S2 eingetragen. Es folgt der Verfahrensschritt V1313. Für die Stackdistanz S2 wird deren Stackdistanzhäufigkeit geprüft, ob diese zu groß ist. Dies erfolgt beispielsweise mittels des nicht normierten Häufigkeitsquotienten QLS2 = SH2/SV2. Der Block B1 mit der Stackdistanz S2 gilt als ein auswählbarer Block, falls folgendes gilt:
QLS2 kleiner NQS (GZS + SV2/NS)

Dies ist nicht der Fall für die Werte NQS = 7; GZW = 0,01; SV2 = 0,2; sowie NS = 0,7; denn es gilt NQS (GZS + SV2/NS) = 7 (0,01 + 0,2/0,7) = 0,07 + 2 = 2,07. Verglichen mit diesem Wert ist QLS2 = 5 größer. Es folgt der Verfahrensschritt V1311. Aus der Liste LB wird der nächstfolgende nicht normierte Häufigkeitsquotient QLB2 = 5 untersucht. Es wird der Block B2 geprüft. Es folgt der Verfahrensschritt V1312. Für den Block B2 wird aus dem Blockstapel BS die Stackdistanz S1 ermittelt. Es folgt der Verfahrensschritt V1313. Für die Stackdistanz S1 wird deren Stackdistanzhäufigkeit geprüft, ob diese zu groß ist.

Dies erfolgt beispielsweise anhand des nicht normierten Häufigkeitsquotienten QLS1 = 2. Dabei wird folgende Bedingung geprüft:
QLS1 kleiner NQS (GZS + SV1/NS)

Diese Bedingung ist erfüllt für die Werte NQS = 7; GZS = 0,01; SV1 = 0,5; sowie NS = 0,7. Es gilt 7 (0,01 + 0,5/0,7) = 0,07 + 0,5/0,1 = 5,07. Verglichen mit diesem Wert ist der nicht normierte Häufigkeitsquotient QLS1 = 2 kleiner. Die Bedingung ist erfüllt. Es folgt der Verfahrensschritt V1314. Als ein erster auswählbarer Block wird der Block B2 vermerkt. Der Verfahrensschritt V1310 ist beendet.

Es folgt der Verfahrensschritt V1320. Dabei wird der Verfahrensschritt V1321 ausgeführt. Es wird die Liste LS durchsucht. Beginnend mit dem niedrigstwertigen nicht normierten Häufigkeitsquotienten QLS1 = 2 wird die Stackdistanz S1 geprüft. Es folgt der Verfahrensschritt V1322. Es wird zur Stackdistanz S1 der Block B2 aus dem Blockstapel BS ermittelt. Es folgt der Verfahrensschritt V1323. Für den Block B2 wird dessen Blockhäufigkeit geprüft, ob diese zu groß ist. Dies erfolgt anhand des nicht normierten Häufigkeitsquotienten QLB2 = 5. Es wird folgende Bedingung geprüft: QLB2 kleiner NQB (GZB + BV2/NB)

Diese Bedingung ist nicht erfüllt für die Werte NQB = 9; GZW = 0,01; BV2 = 0,2; sowie NB = 0,45. Es gilt 9 (0,01 + 0,2/ 0,45) =4,09. Verglichen mit diesem Wert ist der nicht normierte Häufigkeitsquotient QLB2 = 5 größer. Die Bedingung ist nicht erfüllt und es erfolgt der Verfahrensschritt V1321. In der Liste LS wird der nächstfolgende nicht normierte Häufigkeitsquotient QLS2 = 5 untersucht. Es wird die Stackdistanz S2 geprüft. Es folgt der Verfahrensschritt V1322. Für die Stackdistanz S2 wird aus dem Blockstapel BS der Block B1 ermittelt. Es folgt der Verfahrensschritt V1323. Für den Block B1 wird dessen Blockhäufigkeit geprüft, ob diese zu groß ist. Dies erfolgt anhand des nicht normierten Häufigkeitsquotienten QLB1= 4. Es wird folgende Bedingung geprüft: QLB1 kleiner NQB (GZB + BV1/NB)

Diese Bedingung ist erfüllt für die Werte NQB = 9; GZB = 0,01; BV1 = 0,25; sowie NB= 0,45. Es gilt 9 (0,01 + 0,25/0,45) = 5,09. Verglichen mit diesem Wert ist der nicht normierte Häufigkeitsquotient QLB1 = 4 kleiner. Die Bedingung ist erfüllt. Es folgt der Verfahrensschritt V1324. Gemäß der geprüften Stackdistanz S2 wird deren Block B1 als ein zweiter auswählbarer Block vermerkt. Der Verfahrensschritt V1320 ist beendet.

Es folgt der Verfahrensschritt V1330. Dabei wird der Verfahrensschritt V1331 ausgeführt. Für den vermerkten ersten auswählbaren Block B2 wird dessen Häufigkeitsquotient QB2 der Blockhäufigkeit ermittelt. Es gilt QB2 = QLB2/NQB = 5/9 = 0,56.

Es folgt der Verfahrensschritt V1332. Für den vermerkten zweiten auswählbaren Block B1 wird dessen Häufigkeitsquotient QS2 der Stackdistanzhäufigkeit ermittelt. Es gilt QS2 = QLS2/NQS= 5/7 = 0,71.

Es folgt der Verfahrensschritt V1333. Es wird der Häufigkeitsquotient QB2 verglichen mit dem Häufigkeitsquotienten QS2. Der Häufigkeitsquotient QB2 = 0,56 ist kleiner als der Häufigkeitsquotient QS2 = 0,71.

Es folgt der Verfahrensschritt V1335. Es wird der vermerkte erste auswählbare Block B2 ausgewählt für einen Eintrag in den Referenzstring. Der Verfahrensschritt V1330 ist beendet.

Es folgt der Verfahrensschritt V1500. Der ausgewählte Block B2 wird in den Referenzstring RS eingetragen.

Es folgt der Verfahrensschritt V1600. Es wird der Blockstapel BS aktualisiert. Der Block B2 verbleibt an der ersten Stelle des Blockstapels. Gemäß einer Stackdistanz S1. Die Stackdistanzhäufigkeit SH wird aktualisiert. Gemäß der Stackdistanz S1 wird der Wert für die Stackdistanzhäufigkeit SH1 um eins hochgezählt, sodaß gilt SH1 = 2. Es wird die Blockhäufigkeit BH aktualisiert. Für den Block B2 wird die Blockhäufigkeit BH2 um eins hochgezählt, sodaß gilt, BH2 = 2. Es wird die Liste LB aktualisiert. Für den Block B2 wird der nicht normierte Häufigkeitsquotient QLB2 aktualisiert. Es gilt QLB2 = BH2/BV2 = 2/0,2 = 10. Der neu errechnete nicht normierte Häufigkeitsquotient QLB2 wird in die Liste LB nach seinem Wert neu einsortiert. Es wird die Liste LS aktualisiert. Für die Stackdistanz S1 wird der nicht normierte Häufigkeitsquotient QLS1 aktualisiert. Es gilt QLS1 = SH1/SV1 = 2/0,5 = 4. Es wird der aktualisierte nicht normierte Häufigkeitsquotient QLSI = 4 in die Liste LS nach seinem Wert neu einsortiert. Es wird der Normierungswert NQB aktualisiert. Es gilt NQ6 = QLB1 + QLB2 = 4 + 10 = 14. Es wird der Normierungswert NQS aktualisiert. Es gilt NQS = QLS1 + QLS2 = 4 + 5 = 9. Der Verfahrensschritt V1600 wird beendet.

Nach Beendigung des Verfahrensschrittes V1600 liegt eine Aufbereitung gemäß Tabelle 4 vor.

Tabelle 4

| | |
|---|---|
| RS | B1; B2; B2; |
| BS | B2; B1; B3; B4; ..... |
| SH | SH1 = 2; SH2 = 1; |
| BH | BH1 = 1; BH2 = 2; |
| LB | QLB1 = 4; QLB2 = 10; |
| LS | QLS1 = 4; QLS2 = 5; |
| | NB = 0,45; NS = 0,70; NQB = 14; NQS = 9; |

Es folgt der Verfahrensschritt V1700. Es wird erkannt, daß die vorgegebene Eintragsanzahl N = 3 erreicht ist. Es wird der Verfahrensschritt V1000 beendet. Es ist ein Referenzstring RS generiert, in welchem die Blöcke B1, B2, B2 eingetragen sind.

Somit wird als ein Mikromodell einer Last für eine Systemkomponente als die Menge der von einem Programm geforderten Blockzugriffen ein Referenzstring generiert, für dessen Blöcke deren Blockhäufigkeiten und Stackdistanzhäufigkeiten aktualisiert werden, so daß daraus Häufigkeitsquotienten ermittelbar sind, mittels welcher jener Block bestimmt wird, welcher als nächster zu referenzieren ist. Ein derart generierter Referenzstring ist überraschend profiltreu. Das Verfahren ist einsetzbar insbesondere bei der Simulation von beispielsweise hierarisch organisierten und strukturierten Speichersystemen.

**Patentansprüche**

1. Verfahren zum automatischen Generieren eines Referenzstrings, der eine Folge von Aufträgen an ein zu simulierendes Datenverarbeitungssystem oder an eine zu simulierende Datenverarbeitungssystemkomponente als eine Folge von Blöcken darstellt, mit folgenden Schritten: in den Referenzstring wird als ein Eintrag einer von mehreren Blöcken eingetragen (V1500), deren Blockhäufigkeiten im Referenzstring und Stackdistanzhäufigkeiten nach jedem Generierungsschritt aktualisiert werden (V1600), wobei die Stackdistanzhäufigkeiten die relativen Häufigkeiten sind, mit denen auf die jeweiligen Positionen der Referenzstringblöcke in einem vorgesehenen Stapelspeicher (V1100) zugegriffen wurde, indem für die Blöcke Häufigkeitsquotienten der Blockhäufigkeit (V1310) und Häufigkeitsquotienten der Stackdistanzhäufigkeit (V1320) errechnet werden, so daß für den Eintrag einer der Blöcke ausgewählt wird (V1330) entsprechend einem möglichst kleinen errechneten Häufigkeitsquotienten, wobei die Häufigkeitsquotienten für einen betrachteten Block sich ergeben aus der jeweiligen Häufigkeit beim aktuellen Generierungsschritt dividiert durch den Wert aus der jeweiligen diskreten Verteilung, welche für den betrachteten Block im Referenzstring reproduziert werden soll.

2. Verfahren nach Anspruch 1,
bei welchem gemäß einer Stackdistanzverteilung die Stackdistanzhäufigkeiten für einzutragende Blöcke beschränkt werden (V1313).

3. Verfahren nach Anspruch 1 oder 2,
bei welchem gemäß einer Blockverteilung die Blockhäufigkeiten für einzutragende Blöcke beschränkt werden (V1323).

4. Verfahren nach Anspruch 3,
bei welchem ein Normierungswert der Blockhäufigkeiten und ein Normierungswert der Stackdistanzhäufigkeiten aktualisiert werden (V1400), so daß die Häufigkeitsquotienten ohne eine Berücksichtigung der Normierungswerte aktualisierbar und sortierbar sind (V1600).

5. Verfahren nach Anspruch 4,
bei welchem mittels einer Positionsliste festgelegt wird, welcher der Einträge ein neuer Block ist (V1200).

6. Verfahren nach Anspruch 5,
bei welchem ein Blockstapel aktualisiert wird, indem ein zuletzt eingetragener Block an eine oberste Stapelposition gesetzt wird (V1600).

7. Verfahren nach Anspruch 6,
bei welchem im Blockstapel Blöcke in einer Reihenfolge initialisiert werden, welche der Positionsliste für die neuen Blöcke entspricht (V1100).

**Claims**

1. Method for the automatic generation of a reference string, which represents a sequence of jobs to a data processing system to be simulated, or to a data processing system component to be simulated, as a sequence of blocks, having the following steps: one of a plurality of blocks, whose block frequencies in the reference string and stack distance frequencies are updated (V1600) after each generation step, is entered (V1500) as an entry into the reference string, the stack distance frequencies being the relative frequencies at which access has been made to the respective positions of the reference string blocks in a stack store (V1100) provided, in that frequency quotients of the block frequency (V1310) and frequency quotients of the stack distance frequency (V1320) are calculated for the blocks, with the result that for the entry one of the blocks is selected (V1330) in accordance with a calculated frequency quotient that is as small as possible, the frequency quotients for a block under consideration resulting from the respective frequency in the current generation step divided by the value from the respective discrete distribution which is to be reproduced for the block under consideration in the reference string.

2.  Method according to Claim 1, in which the stack distance frequencies for blocks to be entered are restricted (V1313) in accordance with a stack distance distribution.

3.  Method according to Claim 1 or 2, in which the block frequencies for blocks to be entered are restricted (V1323) in accordance with a block distribution.

4.  Method according to Claim 3, in which a normalization value of the block frequencies and a normalization value of the stack distance frequencies are updated (V1400), with the result that the frequency quotients can be updated and sorted (V1600) without taking account of the normalization values.

5.  Method according to Claim 4, in which a position list is used to determine which of the entries is a new block (V1200).

6.  Method according to Claim 5, in which a block stack is updated by putting a block entered last at a topmost stack position (V1600).

7.  Method according to Claim 6, in which blocks are initialized in the block stack in an order which corresponds to the position list for the new blocks (V1100).


**Revendications**

1.  Procédé pour la génération automatique d'une chaîne de référence, qui représente une suite de commandes à un système de traitement de données à simuler ou à une composante à simuler du système de traitement de données en tant que suite de blocs, comportant les étapes suivantes ; dans la chaîne de référence est enregistré, en tant qu'enregistrement, un parmi plusieurs blocs (V1500), dont les fréquences de blocs dans la chaîne de référence et les fréquences des distances de pile sont actualisées après chaque étape de génération (V1600), auquel cas les fréquences des distances de pile sont les fréquences relatives, avec lesquelles il a été accédé aux positions respectives des blocs de la chaîne de référence dans une pile prévue (V1100), en calculant pour les blocs des quotients de fréquence de la fréquence des blocs (V1310) et des quotients de fréquence de la fréquence des distances de pile (V1320), de sorte que pour l'enregistrement un des blocs est sélectionné (V1330) correspondant à un quotient de fréquence calculé, le plus petit possible, les quotients de fréquence pour un bloc considéré résultant de la fréquence respective dans l'étape de génération actuelle divisée par la valeur tirée de la répartition discrète respective, laquelle doit être reproduite pour le bloc considéré dans la chaîne de référence.

2.  Procédé selon la revendication 1, dans lequel suivant une répartition des distances de pile, les fréquences des distances de pile pour des blocs à enregistrer sont limitées (V1313).

3.  Procédé selon la revendication 1 ou 2, dans lequel les fréquences de blocs pour des blocs à enregistrer sont limitées suivant une répartition des blocs (V1313).

4.  Procédé selon la revendication 3, dans lequel une valeur de normalisation des fréquences de blocs et une valeur de normalisation des fréquences de distances de pile sont actualisées (V1400), de sorte que les quotients de fréquence peuvent être actualisés et triés sans considération des valeurs de normalisation (V1600).

5.  Procédé selon la revendication 4, dans lequel il est fixé, au moyen d'une liste de position, lequel des enregistrements est un nouveau bloc (V1200).

6.  Procédé selon la revendication 5, dans lequel une pile de blocs est actualisée, en plaçant le bloc enregistré en dernier à une position de pile supérieure (V1600).

7.  Procédé selon la revendication 6, dans lequel dans la pile de blocs les blocs sont initialisés dans une séquence, laquelle correspond à la liste de position des nouveaux blocs (V1100).

# FIG 1

V1000

| V1100 | Blockstapel BS initialisieren |

| V1200 | neuer Block gemäß Positionsliste PL |

NEIN           JA

| V1300 | gemäß der Häufigkeitsquotienten QB, QS einen Block auswählen |

| V1400 | Normierungswerte NB, NS für Blockverteilung und Stackdistanzverteilung aktualisieren |

| V1500 | Eintrag in den Referenzstring |

| V1600 | Blockstapel BS, Blockhäufigkeiten BH und Stackdistanzhäufigkeiten SH aktualisieren |

| V1700 | Eintragsanzahl N erreicht ? |

JA           NEIN

# FIG 2

V1300

V1310  einen ersten Block auswählen gemäß dessen Blockhäufigkeit

V1320  einen zweiten Block auswählen gemäß dessen Stackdistanzhäufigkeit

V1330  von diesen beiden Blöcken einen auswählen gemäß der Häufigkeits-quotienten

# FIG 3

V1310

V1311  nächsten Block aus der Liste
       LB prüfen

V1312  für diesen Block aus dem Block-
       stapel BS dessen Stackdistanz
       ermitteln

V1313  für diese Stackdistanz deren
       Stackdistanzhäufigkeit prüfen,
       ob zu groß

zu groß

V1314  den geprüften Block auswählen

# FIG 4

V1320

V1321  nächste  Stackdistanz aus der
Liste LS prüfen

V1322  für diese Stackdistanz aus dem
Blockstapel BS den Block ermitteln

V1323  für diesen Block dessen Blockhäufigkeit prüfen, ob zu groß

zu groß

V1324  zur  geprüften  Stackdistanz
deren Block auswählen

# FIG 5

V1330

V1331 für den ersten Block dessen Häufigkeitsquotienten QB der Blockhäufigkeit ermitteln

V1332 für den zweiten Block dessen Häufigkeitsquotienten QS der Stackdistanzhäufigkeit ermitteln

V1333 QB kleiner QS ?

JA          NEIN

V1334 zweiten Block auswählen

V1335 ersten Block auswählen